(19) **Europäisches Patentamt / European Patent Office / Office européen des brevets**

(11) **EP 4 264 329 B1**

(12) **FASCICULE DE BREVET EUROPEEN**

(45) Date de publication et mention de la délivrance du brevet:
**03.12.2025 Bulletin 2025/49**

(21) Numéro de dépôt: **21839835.2**

(22) Date de dépôt: **14.12.2021**

(51) Classification Internationale des Brevets (IPC):
**G01S 19/20** *(2010.01)*  **G01C 21/00** *(2006.01)*

(52) Classification Coopérative des Brevets (CPC):
**G01C 21/005; G01S 19/13; G01S 19/20**

(86) Numéro de dépôt international:
**PCT/EP2021/085581**

(87) Numéro de publication internationale:
**WO 2022/128976 (23.06.2022 Gazette 2022/25)**

(54) **PROCEDE DE SURVEILLANCE ET DE CONSOLIDATION D'UNE SOLUTION DE NAVIGATION SATELLITAIRE**

VERFAHREN ZUR ÜBERWACHUNG UND KONSOLIDIERUNG EINER SATELLITENNAVIGATIONSLÖSUNG

METHOD FOR MONITORING AND CONSOLIDATING A SATELLITE NAVIGATION SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013481**

(43) Date de publication de la demande:
**25.10.2023 Bulletin 2023/43**

(73) Titulaire: **THALES**
**92190 Meudon (FR)**

(72) Inventeurs:
• **BOUVET, Denis**
  **26027 VALENCE (FR)**
• **BONEL, Roland**
  **26000 VALENCE (FR)**
• **MEHLEN, Christian**
  **26800 Etoile sur Rhône (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 648 017     FR-A1- 3 006 771**
**FR-A1- 3 020 469**

• **NAVIPEDIA: "Integrity", 26 July 2018 (2018-07-26), XP093287983, Retrieved from the Internet <URL:https://gssc.esa.int/navipedia/index.php/Integrity>**

**Description**

La présente invention concerne le domaine de la navigation par satellite appliquée à l'aéronautique. Plus précisément, l'invention a trait à un procédé et un dispositif de surveillance de la position d'un aéronef en temps réel et de consolidation de cette position par l'intermédiaire de la navigation satellitaire.

Les systèmes GNSS (Géolocalisation et Navigation par un Système de Satellites) actuels (GPS Navstar, GLONASS, GALILEO, Beidou...) permettent de déterminer la position d'un aéronef et d'obtenir un niveau de précision de l'ordre du mètre environ, mais en l'état, ils ne permettent pas de garantir la précision de la position calculée. Par exemple si un récepteur GNSS utilise les informations d'un satellite défectueux, la position calculée peut alors dévier de quelques mètres jusqu'à plusieurs kilomètres de la position réelle de l'aéronef amenant potentiellement à des situations de danger dans des cas précis. Typiquement, cela peut être lors d'opérations PA (Precision Approach) traduisant, par exemple, des phases d'approche pour un atterrissage proche dans lesquelles l'aéronef utilise un guidage latéral et un guidage vertical à partir des données des systèmes GNSS. Lors de ces opérations PA, l'aéronef nécessite donc une précision accrue. Ainsi, une erreur dans le positionnement de l'aéronef lors de ces phases critiques de vol peut induire des situations dangereuses.

Il peut alors être décidé de combiner aux systèmes GNSS un système d'augmentation. Le système d'augmentation permet de garantir l'intégrité de l'information. Il existe actuellement trois principes d'augmentation du GNSS :

- Le système ABAS (Airborne Based Augmentation System).

- Le système SBAS (Space Based Augmentation System).

- Le système GBAS (Ground Based Augmentation System).

Un équipement GNSS calcule à partir des mesures satellitaires une position en trois dimensions qui peut être utilisée pour des opérations aéronautiques de navigation et/ou d'approche. Généralement, l'équipement GNSS associe à cette position des intervalles de précision et d'intégrité qui permettent au système de navigation de déterminer la faisabilité de l'opération en comparant ces indicateurs à des valeurs limites. Ainsi, les valeurs limites en termes d'intégrité sont appelées limites d'alerte (AL), et les intervalles d'intégrité sont appelés niveaux de protection (PL). Ces derniers sont déterminés en prenant en compte un certain nombre de paramètres tels que l'allocation d'intégrité Signal In Space (SIS) de l'opération ou encore les taux de panne des satellites utilisés par l'équipement GNSS.

Les normes Signal In Space (SIS) caractérisent ainsi les exigences de performance pour chaque opération civile suivant différentes voies :

- la continuité qui correspond à la capacité du système embarqué à fonctionner sans interruption non planifiée pendant la totalité de la période d'étude. Plus précisément, ce paramètre peut se comprendre comme la probabilité que les performances du système soient maintenues pendant l'entièreté de la phase de vol,

- l'intégrité qui correspond à la mesure de la confiance qui peut être placée dans les informations de positionnement apportées par le système de navigation. Les exigences en matière d'intégrité sont caractérisées par les paramètres suivants :

  ◦ une limite d'alerte horizontale (HAL) qui correspond à l'erreur de position horizontale maximale au-delà de laquelle le système de navigation doit être considéré comme inemployable,

  ◦ une limite d'alerte verticale (VAL) qui correspond à l'erreur de position verticale maximale au-delà (au-dessus ou en dessous) de laquelle le système de navigation doit être considéré comme inemployable,

  ◦ un risque d'intégrité $P_{HMI}$ qui correspond à la probabilité que l'erreur sur le positionnement de l'aéronef dépasse des niveaux de protection horizontale et/ou verticale sans que l'utilisateur du système de navigation n'en soit alerté. A titre d'exemple le risque d'intégrité $P_{HMI}$ peut être équivalent à une probabilité de $10^{-7}$ représentant la probabilité d'un événement hasardeux en aéronautique.

Tous ces paramètres sont définis en fonction de l'opération en cours, comme par exemple l'atterrissage de l'aéronef ou la phase de navigation en route. Toutes ces opérations sont classifiées et, de cette classification dépendent de nombreuses contraintes de conception sur l'équipement embarqué. Ainsi, une seconde classification d'exigence liée aux équipements GNSS peut être introduite où le niveau de criticité prévaut. Cette seconde classification ou FDAL (Functionnal Development Assurance Level) précise ainsi les contraintes de développement liées à l'obtention d'un composant avionique certifié. Cette classification FDAL se compose de cinq niveaux de criticité notés de A (le plus critique) à E (le moins critique).

Ainsi, un équipement GNSS combiné à un système ABAS visant des opérations de navigation latérale pour lesquelles la criticité de la panne d'intégrité est jugée majeure peut être associé à un FDAL de niveau C. Un équipement GNSS utilisé pour des opérations d'approche de catégorie I pour lesquelles la criticité de la panne d'intégrité est jugée hasardeuse peut être associé à un FDAL de niveau B. Enfin, un équipement GNSS utilisé pour des opérations d'approche de catégorie III pour lesquelles la criticité de la panne d'intégrité est jugée catastrophique peut être associé à un FDAL de niveau A.

Or le coût lié à la conception d'un composant aéronautique répondant au niveau FDAL (niveau de criticité) pour lequel le composant doit être certifié croît avec le niveau de criticité. Ainsi, un composant aéronautique défini par un FDAL de niveau D est moins coûteux en termes de conception en comparaison à un autre composant défini par un FDAL de niveau A.

De plus, il n'est pas toujours possible de développer un composant aéronautique au niveau FDAL requis pour l'opération. Néanmoins, il est possible de combiner plusieurs composants d'un niveau FDAL inférieur pour remplacer un composant de niveau FDAL supérieur permettant de réaliser l'opération en mettant en place un dispositif de surveillance d'un composant par un autre composant.

Ainsi, à titre d'exemple d'application éventuelle, pour une fonction nécessitant un composant avionique dont la criticité requiert un FDAL de niveau C, un Homme du métier peut choisir d'utiliser la mesure d'un deuxième composant ou capteur dont le niveau de criticité est un FDAL de niveau D et comparer la donnée obtenue de ce deuxième composant à la mesure d'un troisième composant ou capteur de conception différente du deuxième composant, c'est-à-dire que le troisième composant avionique réceptionne des données différentes des données réceptionnées par le deuxième composant et fonctionne différemment en comparaison avec le deuxième composant avionique tout en transférant une mesure équivalente à la mesure déterminée par le deuxième composant avionique, et de niveau de conception ou de criticité équivalent, c'est-à-dire un FDAL de niveau D. Et ainsi, l'Homme du métier peut décider d'interrompre le fonctionnement des équipements avioniques se basant sur les mesures déterminées par le deuxième et le troisième composants si les deux mesures obtenues ne sont pas cohérentes entre elles.

Cependant, cette solution ne peut pas toujours être mise en œuvre, par exemple lorsqu'il n'est pas possible d'équiper un aéronef avec des récepteurs GNSS ayant une conception différente. C'est notamment le cas pour un récepteur utilisant des données en provenance des satellites d'une seconde constellation, par exemple Glonass ou Galileo qui, en comparaison des satellites GPS, ne permet pas d'obtenir des niveaux de protection horizontale et verticale équivalents aux niveaux de protection obtenues par un capteur utilisant des données en provenance des satellites GPS augmentées par un système d'augmentation ABAS, SBAS ou GBAS.

Le document FR 3 006 771 A1 divulgue un procédé de consolidation de la solution d'un système de navigation utilisant deux capteurs exploitant respectivement les signaux de deux constellations satellitaires distinctes (GPS, GLONASS, GALILEO...) et impliquant un premier niveau de consolidation mono-constellation, et un deuxième niveau de consolidation inter-constellation.

L'invention vise à pallier tout ou partie des problèmes cités plus haut en proposant un procédé de consolidation d'une position d'un aéronef par navigation satellitaire permettant de fournir un calcul d'un second niveau de protection horizontale et verticale robuste à toute donnée erronée fournie par un capteur avionique. Par ce mécanisme, il est possible de revendiquer un niveau d'assurance de développement fonctionnel accru des capteurs avioniques pour la position et pour les niveaux de protection associés.

L'invention permet en outre de consolider le niveau de protection d'un premier capteur avionique, même si les taux de panne des satellites utilisés par le deuxième capteur ne permettent pas de calculer des niveaux de protection autonomes pour la mesure fournie par le deuxième capteur.

A cet effet, l'invention a pour objet un procédé de consolidation d'une solution de navigation satellitaire pour un aéronef mettant en œuvre :

- un premier capteur, comportant un système d'augmentation, apte à déterminer une position calculée $\hat{x}^{(1)}$ de l'aéronef, une caractérisation de l'erreur de positionnement de la position calculée $\hat{x}^{(1)}$ et un niveau de protection horizontale $HPL^{(1)}$ de la position calculée $\hat{x}^{(1)}$,
- un second capteur, de conception différente du premier capteur et de niveau de conception équivalent au premier capteur, apte à déterminer une deuxième position $\hat{x}^{(2)}$ de l'aéronef et une caractérisation de l'erreur de positionnement de la deuxième position $\hat{x}^{(2)}$,

le procédé de consolidation comprenant les étapes suivantes :

- Estimation d'un écart horizontal entre la position calculée $\hat{x}^{(1)}$ de l'aéronef et la deuxième position $\hat{x}^{(2)}$ de l'aéronef,
- Comparaison de l'écart horizontal à un seuil de détection préalablement défini,

- Si l'écart horizontal est inférieur au seuil de détection, calcul d'un niveau de protection horizontale additionnel $HPL^{(MON)}$ de la position calculée $\hat{x}^{(1)}$ à partir de la deuxième position $\hat{x}^{(2)}$,
- Estimation d'un niveau de protection horizontale consolidé $HPL^{(CON)}$ en fonction du niveau de protection horizontale additionnel $HPL^{(MON)}$ et du niveau de protection horizontale $HPL^{(1)}$,
- Comparaison du niveau de protection horizontale consolidé $HPL^{(CON)}$ et d'une limite d'alerte horizontale HAL préalablement définie,
- Si le niveau de protection horizontale consolidé $HPL^{(CON)}$ est inférieur à la limite d'alerte horizontale HAL, confirmation horizontale de la position calculée $\hat{x}^{(1)}$ de l'aéronef.

Selon un aspect de l'invention, le procédé de consolidation comprend une étape supplémentaire à la suite de l'étape de confirmation horizontale de la première position $\hat{x}^{(1)}$, de validation de la position calculée $\hat{x}^{(1)}$ de l'aéronef comme position consolidée de l'aéronef.

Selon un aspect de l'invention, le niveau de protection horizontale additionnel $HPL^{(MON)}$ est calculé à partir de l'écart horizontal entre la position calculée $\hat{x}^{(1)}$ de l'aéronef et la deuxième position $\hat{x}^{(2)}$ de l'aéronef et/ou du seuil de détection d'une anomalie de positionnement dans le plan horizontal, et de la caractérisation de l'erreur de positionnement de la deuxième position $\hat{x}^{(2)}$.

Selon un aspect de l'invention, le système d'augmentation du premier capteur est un système d'augmentation aérien (ABAS).

Selon un aspect de l'invention, le système d'augmentation du premier capteur est un système d'augmentation Spatial (SBAS) ou un système d'augmentation au sol (GBAS).

Selon un aspect de l'invention, le premier capteur est apte à déterminer un niveau de protection verticale $VPL^{(1)}$.

Selon un aspect de l'invention, le procédé de consolidation comprend une étape supplémentaire de calcul d'un niveau de protection verticale additionnel $VPL^{(MON)}$ à partir d'un écart vertical entre la position calculée $\hat{x}^{(1)}$ de l'aéronef et de la deuxième position $\hat{x}^{(2)}$ de l'aéronef et/ou du seuil de détection d'une anomalie de positionnement vertical, et de la caractérisation de l'erreur de positionnement de la deuxième position $\hat{x}^{(2)}$ à la suite de l'étape de calcul du niveau de protection horizontal additionnel $HPL^{(MON)}$.

Selon un aspect de l'invention, le procédé de consolidation comprend une étape supplémentaire d'estimation d'un niveau de protection verticale consolidé $VPL^{(CON)}$ en fonction du niveau de protection verticale additionnel $VPL^{(MON)}$ et du niveau de protection verticale $VPL^{(1)}$ à la suite de l'étape d'estimation du niveau de protection horizontale consolidé $HPL^{(CON)}$, le procédé de consolidation comprend une étape supplémentaire de comparaison du niveau de protection verticale consolidé $VPL^{(CON)}$ et d'une limite d'alerte verticale VAL préalablement définie à la suite de l'étape de comparaison du niveau de protection horizontale consolidé $HPL^{(CON)}$ et de la limite d'alerte horizontale HAL préalablement définie.

Selon un aspect de l'invention, le procédé de consolidation comprend une étape supplémentaire de confirmation verticale de la première position $\hat{x}^{(1)}$ si le niveau de protection verticale consolidé $VPL^{(CON)}$ est inférieur à la limite d'alerte verticale VAL à la suite de l'étape de confirmation horizontale.

Selon un aspect de l'invention, le seuil de détection est calculé en fonction d'une allocation de continuité.

L'invention a également pour objet un produit programme d'ordinateur, ledit programme d'ordinateur comprenant des instructions de code permettant d'effectuer les étapes du procédé de consolidation lorsque ledit programme est exécuté sur un ordinateur.

L'invention a également pour objet un support d'enregistrement lisible par un processeur sur lequel est enregistré un programme comportant des instructions pour l'exécution du procédé de consolidation lorsque le programme est exécuté par un processeur.

L'invention a également pour objet un dispositif de consolidation d'une solution de navigation satellitaire apte à mettre en œuvre le procédé de consolidation, comprenant le premier capteur comportant un système d'augmentation, apte à déterminer une position calculée $\hat{x}^{(1)}$ de l'aéronef, une caractérisation de l'erreur de positionnement de la position calculée $\hat{x}^{(1)}$ et un niveau de protection horizontale $HPL^{(1)}$ et le deuxième capteur de conception différente du premier capteur et de niveau de conception équivalent au premier capteur, apte à déterminer une deuxième position $\hat{x}^{(2)}$ de l'aéronef et une caractérisation de l'erreur de positionnement de la deuxième position $\hat{x}^{(2)}$.

L'invention sera mieux comprise et d'autres avantages apparaîtront à la lecture de la description détaillée d'un mode de réalisation donné à titre d'exemple, description illustrée par le dessin joint dans lequel :

[Fig.1] la figure 1 représente un procédé de consolidation d'une solution de navigation satellitaire pour un aéronef selon l'invention ;

[Fig.2] la figure 2 représente le procédé de consolidation d'une solution de navigation satellitaire pour un aéronef selon une variante de l'invention ;

[Fig.3] la figure 3 représente un dispositif de consolidation d'une solution de navigation satellitaire selon l'invention ;

Par souci de clarté, les mêmes éléments porteront les mêmes repères dans les différentes figures.

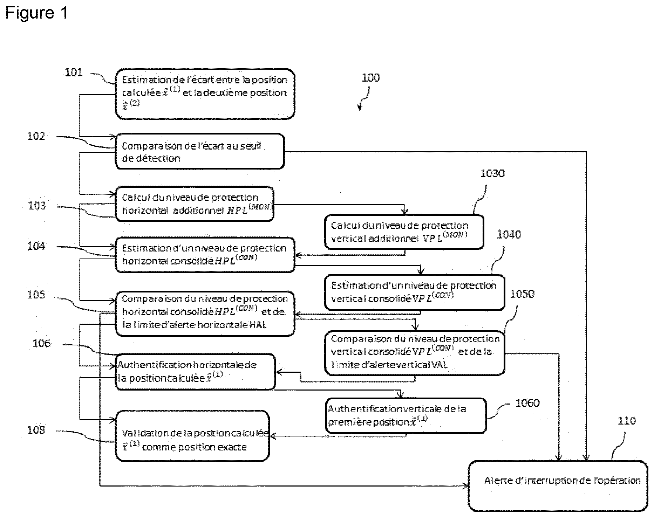

La figure 1 représente un procédé de consolidation 100 d'une solution de navigation satellitaire pour un aéronef selon l'invention. Plus précisément le procédé de consolidation 100 de la position d'un aéronef est applicable dans le cadre d'opérations de détection de la position d'un aéronef en trois dimensions.

Lors d'une opération utilisant la position en trois dimensions issue de mesures satellitaires GNSS, un aéronef peut comprendre un premier capteur GNSS et un deuxième capteur GNSS de conception différente et ayant un niveau FDAL identique permettant de surveiller les mesures effectuées par le premier capteur GNSS en comparant par exemple les mesures obtenues en matière de position et/ou de déviation de la trajectoire.

Le premier et le deuxième capteur doivent tous les deux respecter la norme liée au risque d'intégrité $P_{HMI}$, c'est-à-dire avoir un taux d'erreur de positionnement dépassant les niveaux de protection des premier et deuxième capteurs inférieur au taux requis.

Ainsi, le premier capteur est capable d'associer à une position calculée $\hat{x}^{(1)}$ une matrice de covariance $C^{(1)}$ caractérisant l'erreur de positionnement de la position calculée $\hat{x}^{(1)}$ associée aux normes Signal In Space énoncées, un niveau de protection horizontale ($HPL^{(1)}$) représentant l'espace horizontal d'assurance dans lequel est compris la position calculée $\hat{x}^{(1)}$ pour une probabilité de 1 - $P_{HMI}$. Le niveau de protection horizontale ($HPL^{(1)}$) représente spatialement le rayon d'un cercle sur le plan horizontal comprenant la position calculée $\hat{x}^{(1)}$ selon une probabilité d'environ 1 - $10^{-7}$. Le premier capteur comprend un système d'augmentation de type ABAS. Cependant, le premier capteur peut aussi comprendre un système d'augmentation de type SBAS ou GBAS.

Le premier capteur peut éventuellement être capable de fournir un niveau de protection vertical ($VPL^{(1)}$) représentant l'espace vertical d'assurance dans lequel est comprise la position calculée $\hat{x}^{(1)}$ pour une probabilité proche de cent pourcent en utilisant le système d'augmentation qui respecte la norme liée au risque d'intégrité $P_{HMI}$.

Le deuxième capteur est capable de fournir une estimation d'une deuxième position $\hat{x}^{(2)}$ ainsi qu'une matrice de covariance $C^{(2)}$ caractérisant l'erreur de positionnement de la deuxième position $\hat{x}^{(2)}$ associée en fonction des normes Signal In Space énoncées.

Le deuxième capteur n'est pas nécessairement capable d'associer à l'estimation de la deuxième position $\hat{x}^{(2)}$ des niveaux de protection horizontaux et verticaux du fait, par exemple, de l'impossibilité de mettre en œuvre un système d'augmentation garantissant l'allocation d'intégrité $P_{HMI}$. Néanmoins, le deuxième capteur peut être apte à fournir ces niveaux de protection si cette action lui est possible dans le respect des normes Signal In Space et, plus précisément, en respectant le risque d'intégrité $P_{HMI}$.

A titre d'exemple, le premier capteur GNSS peut être un capteur GPS communiquant exclusivement avec la constellation de satellites GPS. En effet, le taux d'erreur de positionnement ou taux de panne d'un ou plusieurs satellites GPS n'influençant pas le premier capteur, augmenté par un système d'augmentation, à dépasser la norme liée au risque d'intégrité $P_{HMI}$, le capteur GPS peut fournir un niveau de protection horizontale ($HPL^{(1)}$) et, optionnellement, un niveau de protection verticale ($VPL^{(1)}$). Le deuxième capteur GNSS peut être un capteur communiquant exclusivement avec une seconde constellation de satellites, par exemple Glonass ou Galileo. Or, dans certains cas, le taux de panne de ces satellites, ne permet pas au deuxième capteur de fournir des rayons de protection conformes au risque d'intégrité $P_{HMI}$. Dans ces conditions, il n'est plus possible pour le deuxième capteur de fournir en temps réel des niveaux de protection horizontaux et verticaux en adéquation avec les normes Signal In Space et le risque d'intégrité $P_{HMI}$. Ainsi, la deuxième position $\hat{x}^{(2)}$ peut ne pas être intrinsèquement intègre par rapport aux normes Signal In Space puisqu'il suffit d'avoir, en plus de la deuxième position $\hat{x}^{(2)}$, l'erreur de positionnement de la deuxième position $\hat{x}^{(2)}$ représentée par la matrice de covariance $C^{(2)}$.

En effet, en reprenant l'exemple du capteur GPS comme premier capteur et du capteur Glonass ou Galileo comme deuxième capteur, la probabilité d'une panne ou d'une erreur de positionnement d'au minimum deux satellites de la constellation GPS est de l'ordre de $10^{-8}$ ce qui est largement inférieur à un risque d'intégrité $P_{HMI}$ de l'ordre de $10^{-7}$ et prouve qu'un événement impliquant la panne de plus de deux satellites de la constellation GPS communiquant avec le premier capteur ou capteur GPS est peu probable. De plus, la probabilité d'une panne ou d'une erreur de positionnement d'un unique satellite de la constellation GPS est d'environ $10^{-5}$. Néanmoins, le système d'augmentation (ABAS, SBAS ou même GBAS) que comporte le premier capteur ou capteur GPS permet d'identifier le satellite dit erroné et permet ainsi d'écarter les données en provenance de ce satellite dit erroné du traitement du premier capteur ou capteur GPS.

A l'inverse, la probabilité d'une panne ou d'une erreur de positionnement d'au moins deux satellites de la seconde constellation peut être supérieure au risque d'intégrité $P_{HMI}$. Ceci implique donc qu'il est hautement possible qu'au moins deux satellites de la seconde constellation puissent être des satellites dits erronés sans pour autant pouvoir identifier lesquels. Ainsi, la deuxième position $\hat{x}^{(2)}$ peut être considéré comme peu intègre mais tolérée par le procédé de consolidation 100 tant que la deuxième position $\hat{x}^{(2)}$ est accompagnée de l'incertitude liée à cette donnée ou l'erreur de positionnement de la deuxième position $\hat{x}^{(2)}$ représentée par la matrice de covariance $C^{(2)}$. Ainsi, le procédé de consolidation 100 d'une solution de navigation satellitaire présente l'avantage de pouvoir faire du monitoring ou de la surveillance d'une première solution ou position calculée $\hat{x}^{(1)}$ de l'aéronef intègre par une deuxième solution ou deuxième position $\hat{x}^{(2)}$ ne respectant pas nécessairement les normes d'intégrité Signal In Space.

Le procédé de consolidation 100 d'une solution de navigation satellitaire pour un aéronef comprend alors une étape d'estimation 101 d'un écart horizontal, c'est-à-dire un écart dans le plan horizontal, de distance entre la position calculée $\hat{x}^{(1)}$ de l'aéronef par le premier capteur GNSS et la deuxième position $\hat{x}^{(2)}$ de l'aéronef calculée par le deuxième capteur GNSS.

Cet écart horizontal permet de traduire, sous la forme d'une valeur absolue à trois valeurs absolues, une différence de positionnement de l'aéronef selon le premier et le deuxième capteur GNSS. Généralement, le deuxième capteur GNSS assure un monitoring ou une surveillance constante vis-à-vis du premier capteur ou capteur GPS afin d'être certain de l'intégrité de la position calculée $\hat{x}^{(1)}$.

Ainsi, un grand écart horizontal peut traduire une erreur dans le positionnement de l'aéronef et donc alerter les composants avioniques et les hommes interagissant avec ces composants avioniques de l'altération de la position calculée $\hat{x}^{(1)}$ de l'aéronef.

A l'inverse, un faible écart horizontal permet de confirmer la position calculée $\hat{x}^{(1)}$ par sa cohérence avec la deuxième position $\hat{x}^{(2)}$ de l'aéronef.

Après avoir estimé cet écart horizontal lors de l'étape 101, le procédé de consolidation 100 de la solution de navigation satellitaire compare (étape 102) l'écart horizontal estimé avec un seuil de détection préalablement défini. Le seuil de détection est généralement défini et calculé à partir d'une allocation de continuité mise en place en fonction des normes de continuité Signal in Space et des erreurs de positionnement de la position calculée $\hat{x}^{(1)}$ et de la deuxième position $\hat{x}^{(2)}$. Cette allocation de continuité peut être, par exemple, une probabilité qu'une opération quelconque définie par des contraintes en matière de continuité et d'intégrité liées directement aux normes Signal In Space soit interrompue du fait d'une fausse alerte résultant des dispositifs de surveillance des signaux satellitaires. Cette probabilité peut être évaluée en fonction des spécifications et incertitudes des capteurs utilisés ou en fonction des spécificités des constellations de satellites communiquant avec le premier et/ou le deuxième capteur. A titre d'exemple, le seuil d'erreur peut être déterminé de la façon suivante :

$$T = K_{fa} \times \sigma_{inc}^{(1)-(2)}$$

Où $T$ représente le seuil de détection, $K_{fa}$ représente la probabilité que l'opération soit interrompue à cause d'une fausse alerte et $\sigma_{inc}^{(1)-(2)}$ représente l'écart type entre les deux solutions, à savoir la position calculée $\hat{x}^{(1)}$ et la deuxième position $\hat{x}^{(2)}$. Ainsi, cet écart type peut être calculé de la manière suivante :

$$\sigma_{inc}^{(1)-(2)} = \sqrt{C^{(1)} + C^{(2)}}$$

Avec $C^{(1)}$ qui est la matrice de covariance représentant l'erreur de positionnement de la position calculée $\hat{x}^{(1)}$ et $C^{(2)}$ qui est la matrice de covariance représentant l'erreur de positionnement de la deuxième position $\hat{x}^{(2)}$.

Si le seuil de détection est franchi, c'est-à-dire si l'écart horizontal entre la position calculée $\hat{x}^{(1)}$ et la deuxième position $\hat{x}^{(2)}$ est supérieur au seuil de détection, le procédé de consolidation 100 de la solution déclenche une alerte (étape 110) d'interruption de l'opération permettant de manifester une anomalie liée à l'altération de la position calculée $\hat{x}^{(1)}$. Cette alerte (étape 110) permet alors d'interrompre directement l'opération en cours. Plus précisément, lorsque l'alerte (étape 110) est déclenchée à la suite de l'étape de comparaison (étape 102) entre l'écart horizontal estimé et le seuil de détection, elle représente une incohérence liée à la position calculée $\hat{x}^{(1)}$.

A l'inverse, si aucune anomalie n'est détectée, c'est-à-dire si le seuil de détection n'est pas franchi, le procédé de consolidation 100 de la solution permet d'initier le calcul (étape 103) d'un niveau de protection horizontale additionnel $HPL^{(MON)}$ à partir de la deuxième position $\hat{x}^{(2)}$ et de l'incertitude de positionnement associée. Le niveau de protection horizontale additionnel $HPL^{(MON)}$ est, à l'image du niveau de protection horizontale ($HPL^{(1)}$), un rayon d'un cercle sur le plan horizontal comprenant la position calculée $\hat{x}^{(1)}$ selon une probabilité certaine, à partir du deuxième capteur et de la deuxième position $\hat{x}^{(2)}$. Plus précisément, le niveau de protection horizontale additionnel $HPL^{(MON)}$, qui n'est pas le rayon de protection horizontale de la deuxième position $\hat{x}^{(2)}$ puisqu'il n'est pas possible de vérifier la bonne intégrité de la deuxième position $\hat{x}^{(2)}$ en accord avec le risque d'intégrité $P_{HMI}$ à cause des taux de panne potentiels d'une pluralité de satellites communiquant avec le deuxième capteur, est calculé à partir de l'écart horizontal entre la position calculée $\hat{x}^{(1)}$ et la deuxième position $\hat{x}^{(2)}$ estimé lors de l'étape 101 et/ou du seuil de détection d'une anomalie de positionnement dans le plan horizontal, et de la caractérisation de l'erreur de positionnement, dans le plan horizontal, de la deuxième position $\hat{x}^{(2)}$, représentée par la matrice de covariance $C^{(2)}$.

Dès lors, le procédé de consolidation 100 de la solution initie une étape d'estimation (étape 104) d'un niveau de protection horizontale consolidé $HPL^{(CON)}$ de la position calculée $\hat{x}^{(1)}$ en fonction du niveau de protection horizontale additionnel $HPL^{(MON)}$ de la position calculée $\hat{x}^{(1)}$ et du niveau de protection horizontale $HPL^{(1)}$ de la position calculée $\hat{x}^{(1)}$. Plus précisément, le procédé de consolidation 100 effectue une comparaison entre le niveau de protection horizontale additionnel $HPL^{(MON)}$ et le niveau de protection horizontale $HPL^{(1)}$ afin de déterminer le niveau de protection le plus élevé. Cette comparaison peut se faire, par exemple, selon la formule suivante :

$$\max\left(HPL^{(1)}, HPL^{(MON)}\right)$$

Cette étape d'estimation 104 du niveau de protection horizontale consolidé $HPL^{(CON)}$ de la position calculée $\hat{x}^{(1)}$ permet garantir la protection autour de la position calculée $\hat{x}^{(1)}$ en maximisant l'incertitude liée au positionnement de la position calculée $\hat{x}^{(1)}$ induite par d'éventuelles erreurs non répertoriées. En effet, cette étape d'estimation 104 permet de définir le rayon le plus grand du cercle sur le plan horizontal comprenant la position calculée $\hat{x}^{(1)}$ assurant du mieux possible la position de l'aéronef dans ce cercle élargi pour se protéger d'une erreur de conception qui conduirait par exemple à la sous-estimation du niveau de protection horizontale $HPL^{(1)}$ et à une confiance excessive dans la solution de guidage. De cette manière, le procédé permet de fournir un rayon de protection au niveau FDAL désiré car consolidé par l'utilisation de deux infos différentes provenant du premier capteur et du deuxième capteur.

S'en suit alors une comparaison (étape 105) du niveau de protection horizontale consolidé $HPL^{(CON)}$ et d'une limite d'alerte horizontale HAL préalablement définie en fonction des normes Signal In Space et en fonction de l'opération réalisée. Cette étape de comparaison 105 permet de vérifier si le niveau de protection horizontale consolidé $HPL^{(CON)}$ est supérieur ou non à la limite d'alerte horizontale HAL de l'aéronef.

La limite d'alerte horizontale HAL peut être une norme physique ou une contrainte opérationnelle comme par exemple une distance maximale à ne pas dépasser en comparaison du rayon du cercle du niveau de protection horizontale consolidé $HPL^{(CON)}$. L'Organisation de l'Aviation Civile Internationale (OACI) a ainsi établi des normes en lien avec la limite d'alerte horizontale en fonction des opérations de l'aéronef. A titre d'exemple, une opération NPA typiquement une phase d'atterrissage est normée par une limite d'alerte horizontale HAL de cinq-cent-cinquante-six mètres. Pour une opération PA CAT-I (Precision Approach de catégorie un), représentant l'une des phases d'approche les plus exigeantes en termes de performance de navigation, la limite d'alerte horizontale selon l'OACI est de quarante mètres. Cette limite d'alerte horizontale HAL peut alors être évaluée directement par l'Homme du métier tant qu'elle ne contredit pas les recommandations de l'OACI.

Si le niveau de protection horizontale consolidé $HPL^{(CON)}$ est supérieur à la limite d'alerte horizontale HAL, le procédé de consolidation 100 déclenche l'alerte d'interruption de l'opération (étape 110) permettant de manifester une alerte de performance horizontale insuffisante, c'est-à-dire que l'espace de garantie de la position est trop grand par rapport à l'opération en cours. Il faut alors l'interrompre car l'opération peut induire un danger immédiat pour l'aéronef en alertant les hommes de bord interagissant directement avec les composants avioniques.

Dans le cas contraire, c'est-à-dire si le niveau de protection horizontale consolidé $HPL^{(CON)}$ de la position calculée $\hat{x}^{(1)}$ est inférieur à la limite d'alerte horizontale HAL, s'opère alors une confirmation horizontale (étape 106) de la première position $\hat{x}^{(1)}$ de l'aéronef. Plus précisément, cette étape de confirmation horizontale (étape 106) permet de savoir si l'opération est réalisable en cohérence avec les différentes limites d'alerte.

Comme dit précédemment, lors d'une phase d'approche NPA, seul un guidage latéral est nécessaire pour permettre à l'aéronef d'atterrir. Pour ce genre d'opération, la première position $\hat{x}^{(1)}$ de l'aéronef peut alors être validée (étape 108) par au moins un composant avionique comme position consolidée de l'aéronef.

Néanmoins, afin d'assurer une bonne intégrité du positionnement de l'aéronef dans son environnement, et lors de phase nécessitant un guidage vertical, typiquement lors d'opérations APV (Approach and landing Procedures with Vertical Guidance) ou d'opérations PA (Precision Approach) utilisant un guide latéral et vertical, le procédé de consolidation 100 de la solution peut aussi effectuer un monitoring pour observer l'intégrité de la position calculée $\hat{x}^{(1)}$ selon des normes de verticalité.

Comme énoncé précédemment, le premier capteur peut fournir un niveau de protection verticale ($VPL^{(1)}$) représentant l'espace vertical d'assurance dans lequel est compris la position calculée $\hat{x}^{(1)}$ pour une probabilité de $1 - P_{HMI}$ en utilisant le système d'augmentation compris dans le premier capteur qui respecte la norme liée au risque d'intégrité $P_{HMI}$. Le niveau de protection verticale ($VPL^{(1)}$) représente le demi-segment de l'axe vertical traversant l'aéronef comprenant la position calculée $\hat{x}^{(1)}$ selon le premier capteur.

Comme dit précédemment, le deuxième capteur n'est pas nécessairement capable d'associer à l'estimation de la deuxième position $\hat{x}^{(2)}$ des niveaux de protection horizontale et verticale.

Ainsi, le procédé de consolidation 100 de la solution peut comprendre une étape supplémentaire de calcul 1030 d'un niveau de protection verticale additionnel $VPL^{(MON)}$ à partir d'un écart vertical, c'est-à-dire un écart dans le plan vertical, entre la position calculée $\hat{x}^{(1)}$ de l'aéronef (10) et la deuxième position $\hat{x}^{(2)}$ et/ou du seuil de détection d'une anomalie de positionnement vertical, et de la caractérisation de l'erreur de positionnement de la deuxième position $\hat{x}^{(2)}$ représentée par la matrice de covariance $C^{(2)}$. Cette étape de calcul du niveau de protection verticale additionnel $VPL^{(MON)}$ peut s'opérer à la suite de l'étape de calcul 103 du niveau de protection horizontale additionnel $HPL^{(MON)}$ mais peut aussi s'exécuter en parallèle de l'étape de calcul 103 du niveau de protection horizontale additionnel $HPL^{(MON)}$. L'étape de calcul 1030 du niveau de protection verticale additionnel $VPL^{(MON)}$ peut aussi être exécutée une fois que la confirmation horizontale (étape 106) de la position calculée $\hat{x}^{(1)}$ est exécutée.

De manière similaire au niveau de protection horizontale additionnel $HPL^{(MON)}$, le niveau de protection verticale additionnel $VPL^{(MON)}$ est calculé à partir de l'écart vertical entre la position calculée $\hat{x}^{(1)}$ et la deuxième position $\hat{x}^{(2)}$ estimé par exemple parallèlement à l'écart horizontal lors de l'étape 101, et/ou du seuil de détection d'une anomalie de positionnement, et de la caractérisation de l'erreur de positionnement de la deuxième position $\hat{x}^{(2)}$, représentée par la matrice de covariance $C^{(2)}$.

A la suite du calcul 1030 du niveau de protection verticale additionnel $VPL^{(MON)}$, le procédé de consolidation 100 de la solution peut comprendre une étape supplémentaire d'estimation 1040 d'un niveau de protection verticale consolidé $VPL^{(CON)}$ en fonction du niveau de protection verticale additionnel i$VPL^{(MON)}$ et du niveau de protection verticale $VPL^{(1)}$. Cette étape d'estimation 1040 peut être exécutée à la suite de l'étape d'estimation 104 du niveau de protection horizontale consolidé $HPL^{(CON)}$ ou peut être exécutée en parallèle de l'étape d'estimation 104 du niveau de protection horizontale consolidé $HPL^{(CON)}$. L'étape d'estimation 1040 du niveau de protection verticale consolidé $VPL^{(CON)}$ peut aussi être exécutée une fois que la confirmation horizontale (étape 106) de la position calculée $\hat{x}^{(1)}$ est exécutée tant que l'étape d'estimation 1040 succède à l'étape de calcul 1030 du niveau de protection verticale additionnel $VPL^{(MON)}$.

Ainsi, le procédé de consolidation 100 effectue, lors de cette étape d'estimation 1040, une comparaison entre le niveau de protection verticale additionnel $VPL^{(MON)}$ de la position calculée $\hat{x}^{(1)}$ et le niveau de protection verticale $VPL^{(1)}$ de la position calculée $\hat{x}^{(1)}$ afin de déterminer le niveau de protection le plus élevé. Cette comparaison peut se faire, par exemple, selon la formule suivante :

$$\max\left(VPL^{(1)}, VPL^{(MON)}\right)$$

De manière semblable au niveau de protection horizontal consolidé $HPL^{(CON)}$, le niveau de protection vertical additionnel $VPL^{(MON)}$ permet de garantir la protection verticale autour de la position calculée $\hat{x}^{(1)}$ en maximisant l'incertitude liée au positionnement de la position calculée $\hat{x}^{(1)}$ induite par d'éventuelles erreurs non répertoriées. En effet, cette étape d'estimation 1040 permet de définir le demi-segment le plus grand dans l'axe vertical traversant l'aéronef comprenant la position calculée $\hat{x}^{(1)}$ assurant du mieux possible la position de l'aéronef. De cette manière, le procédé permet de fournir un rayon de protection au niveau FDAL désiré car consolidé par l'utilisation de deux informations différentes provenant du premier capteur et du deuxième capteur.

A la suite de cette étape d'estimation 1040 du niveau de protection verticale consolidé $VPL^{(CON)}$, le procédé de consolidation 100 comprend une étape supplémentaire de comparaison 1050 du niveau de protection verticale consolidé $VPL^{(CON)}$ et d'une limite d'alerte verticale VAL préalablement définie. Cette étape de comparaison 1050 peut être exécutée à la suite de l'étape de comparaison 105 du niveau de protection horizontale consolidé $HPL^{(CON)}$ et de la limite d'alerte horizontale HAL ou peut être exécutée en parallèle de l'étape de comparaison 105 du niveau de protection horizontale consolidé $HPL^{(CON)}$ et de la limite d'alerte horizontale HAL. L'étape de comparaison 1050 peut aussi être exécutée une fois que la confirmation horizontale 106 de la position calculée $\hat{x}^{(1)}$ est exécutée tant que l'étape de comparaison 1050 succède à l'étape d'estimation 1040 du niveau de protection verticale consolidé $VPL^{(CON)}$.

Comme pour l'étape de comparaison 105, cette étape de comparaison 1050 permet de vérifier si le niveau de protection verticale consolidé $VPL^{(CON)}$ est inférieur à la limite d'alerte verticale VAL de l'opération.

Comme pour la limite d'alerte horizontale HAL, la limite d'alerte verticale VAL peut être une norme physique ou une contrainte opérationnelle comme par exemple une distance maximale à ne pas dépasser en comparaison du niveau de protection verticale consolidé $VPL^{(CON)}$. L'Organisation de l'Aviation Civile Internationale (OACI) a ainsi établi des normes en lien avec la limite d'alerte verticale en fonction des opérations de l'aéronef. Pour une opération NPA, le guidage vertical n'étant pas dépendant du GNSS, l'OACI n'a pas présenté de limite d'alerte verticale VAL. Néanmoins, pour une opération PA-CAT I (Precision Approach de catégorie un), correspondant à l'une des phases d'approche et d'atterrissage les plus exigeantes en termes de performances de navigation, le guidage vertical est nécessaire. Ainsi, l'OACI fixe la limite d'alerte verticale VAL entre dix et trente-cinq mètres. Cette limite d'alerte verticale VAL peut alors être évaluée directement par l'Homme du métier tant qu'elle respecte les normes de l'OACI.

Si le niveau de protection verticale consolidé $VPL^{(CON)}$ est supérieur à la limite d'alerte verticale VAL, le procédé de consolidation 100 déclenche l'alerte (étape 110) d'interruption de l'opération permettant de manifester une anomalie liée à une insuffisance de la performance verticale, c'est-à-dire que l'espace de garantie de la position est trop grand par rapport à l'opération en cours. Il faut alors l'interrompre l'opération.

Dans le cas contraire, c'est-à-dire si le niveau de protection verticale consolidé $VPL^{(CON)}$ de la position calculée

$\hat{x}^{(1)}$ est inférieur à la limite d'alerte verticale VAL, s'opère alors une confirmation verticale (étape 1060) de la première position $\hat{x}^{(1)}$ de l'aéronef.

L'étape de confirmation verticale 1060 peut être exécutée à la suite de l'étape de confirmation horizontale 106 ou peut être exécutée en parallèle de l'étape de confirmation horizontale 106 tant que l'étape de confirmation verticale 1060 succède, directement ou indirectement, à l'étape de comparaison 1050.

Ainsi, lors d'opérations nécessitant un guidage latéral et vertical (opération PA ou APV), lorsque la confirmation horizontale (étape 106) et la confirmation verticale (étape 1060) sont exécutées, la première position $\hat{x}^{(1)}$ de l'aéronef peut alors être validée (étape 108) par au moins un composant avionique comme position consolidée de l'aéronef.

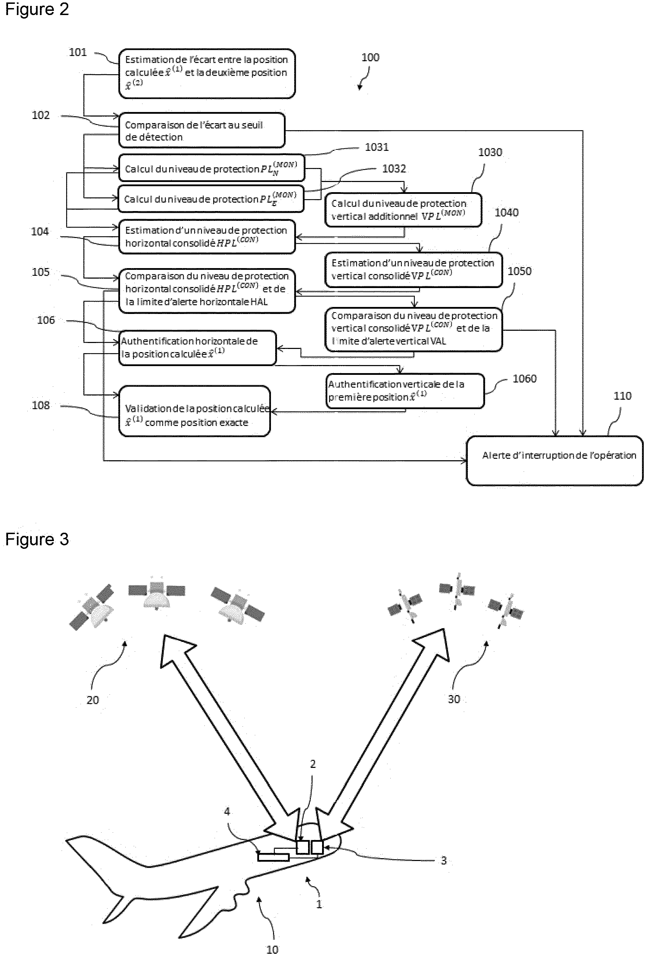

En outre, le positionnement de l'aéronef se faisant en trois dimensions, le plan horizontal pouvant être assimilée à un plan d'axe principal la direction du nord magnétique et d'axe secondaire la direction formant un angle droit avec l'axe principal dans le plan horizontal selon le sens horaire, c'est-à-dire la direction de l'est, la troisième dimension étant l'axe vertical. Le procédé peut comprendre, comme représenté en figure 2, des sous-étapes de calcul 1031 et 1032 d'un niveau de protection horizontale additionnel selon l'axe principal, c'est-à-dire en fonction de la direction du nord $PL_N^{(MON)}$ qui représente la limite d'erreur de position dans laquelle est comprise la position calculée $\hat{x}^{(1)}$ par rapport à l'axe principal pointant vers le nord magnétique et d'un niveau de protection horizontale additionnel selon l'axe secondaire, c'est-à-dire en fonction de la direction de l'est $PL_E^{(MON)}$ qui représente la limite d'erreur de position dans laquelle est comprise la position calculée $\hat{x}^{(1)}$ par rapport à l'axe secondaire qui pointe en direction de l'est. Ces sous-étapes de calcul 1031 du niveau de protection horizontale additionnel selon l'axe principal $PL_N^{(MON)}$ et de calcul 1032 du niveau de protection horizontale additionnel selon l'axe principal $PL_E^{(MON)}$ peuvent remplacer l'étape 103.

Dès lors, l'étape d'estimation 104 du niveau de protection horizontale consolidé $HPL^{(CON)}$ de la position calculée $\hat{x}^{(1)}$ compare le niveau de protection horizontale $HPL^{(1)}$ de la position calculée $\hat{x}^{(1)}$, le niveau de protection horizontale additionnel selon l'axe principal $PL_N^{(MON)}$ et niveau de protection horizontale additionnel selon l'axe secondaire $PL_E^{(MON)}$. A titre d'exemple, l'estimation 104 du niveau de protection horizontale consolidé $HPL^{(CON)}$ peut se faire selon la formule suivante :

$$HPL^{(CON)} = \max\left( HPL^{(1)}, \sqrt{\left(PL_N^{(MON)}\right)^2 + \left(PL_E^{(MON)}\right)^2} \right)$$

Pour pouvoir exécuter le procédé de consolidation 100 de la solution, un aéronef 10 peut comprendre un dispositif de consolidation 1 d'une solution de navigation satellitaire comme représenté à la figure 3. Le dispositif de consolidation 1 de la solution de navigation satellitaire est apte à mettre en œuvre le procédé de consolidation 100. Le dispositif de consolidation 1 comprend un premier capteur 2 ou capteur GPS, comportant un système d'augmentation, apte à déterminer la première position $\hat{x}^{(1)}$ de l'aéronef 10, la caractérisation de l'erreur de positionnement de la position calculée $\hat{x}^{(1)}$ et le niveau de protection horizontale $HPL^{(1)}$. Comme cité précédemment, le premier capteur 2 peut être, de façon préférentielle un capteur GPS communiquant exclusivement avec des satellites 20 de la constellation GPS. Le dispositif de consolidation 1 comprend également le deuxième capteur 3 de conception différente du premier capteur 2 qui est un capteur GPS, c'est-à-dire un capteur dont l'architecture et le fonctionnement est différent de l'architecture et du fonctionnement du premier capteur 2 et/ou dont les données captées sont différentes des données captées par le premier capteur 2. A titre d'exemple, le deuxième capteur 3 peut être un capteur Glonass ou Galileo ne communiquant qu'avec des satellites 30 de la constellation Glonass ou Galileo. Le deuxième capteur 3 doit aussi avoir un niveau de conception équivalent au premier capteur 2, c'est-à-dire répondre aux normes de criticité FDAL équivalente. De plus, le deuxième capteur 3 est apte à déterminer une deuxième position $\hat{x}^{(2)}$ de l'aéronef 10 et une caractérisation de l'erreur de positionnement de la deuxième position $\hat{x}^{(2)}$, représentée par la matrice de covariance $C^{(2)}$ des erreurs de positionnement.

En outre, un programme d'ordinateur peut aussi comprendre des instructions de code permettant d'effectuer les étapes du procédé de consolidation 100 de la solution lorsque le programme est exécuté sur un ordinateur. Mais l'invention peut aussi être applicable pour un support d'enregistrement lisible par un processeur sur lequel est enregistré un programme comportant des instructions pour l'exécution du procédé de consolidation 100 lorsque le programme est exécuté par un processeur.

Cette consolidation de la position de l'aéronef 10 peut être mise en œuvre dans un seul équipement qui intègre le premier capteur 2 et le deuxième capteur 3, ainsi qu'un dispositif 4 recueillant les données en provenance du premier capteur 2 et du deuxième capteur 3 pour surveiller la position calculée $\hat{x}^{(1)}$ de l'aéronef 10 et consolider les niveaux de protection associés avant une sortie vers l'extérieur des informations de navigation en direction des autres composants avioniques de l'aéronef 10.

La consolidation peut également être mise en œuvre avec deux équipements GNSS distincts, c'est-à-dire que le premier capteur 2 et le deuxième capteur 3 ne sont pas intégrés dans un équipement global, comme représenté sur la figure 2, fournissant au dispositif 4 les informations requises pour la consolidation de la sortie du premier capteur 2, à savoir la position calculée $\hat{x}^{(1)}$.

Le dispositif de consolidation 1 permet, par l'intermédiaire du procédé de consolidation 100, lors d'opérations nécessitant seulement un guidage latéral, d'exécuter les étapes d'estimation 101, de comparaison 102, de calcul 103, d'estimation 104, de comparaison 105, de confirmation horizontale 106, de validation 108 et d'alerte 110. De plus, le dispositif de consolidation 1 permet, par l'intermédiaire du procédé de consolidation 100, lors d'opérations nécessitant un guidage latéral et un guidage vertical, d'exécuter, en plus des étapes d'estimation 101, de comparaison 102, de calcul 103, d'estimation 104, de comparaison 105, de confirmation horizontale 106, de validation 108 et d'alerte 110, les étapes de calcul 1030, d'estimation 1040, de comparaison 1050 et de confirmation verticale 1060.

## Revendications

1. Procédé de consolidation (100) d'une solution de navigation satellitaire pour un aéronef (10) mettant en œuvre :

   - un premier capteur (2), comportant un système d'augmentation, adapté pour déterminer une position calculée $\hat{x}^{(1)}$ de l'aéronef (10), une caractérisation de l'erreur de positionnement de la position calculée $\hat{x}^{(1)}$ et un niveau de protection horizontale $HPL^{(1)}$ de la position calculée $\hat{x}^{(1)}$,
   - un second capteur (3), de conception différente du premier capteur et de niveau de conception équivalent au premier capteur (2), l'architecture et le fonctionnement du second capteur étant différents de l'architecture et du fonctionnement du premier capteur (2) et/ou des données captées par le second capteur étant différentes des données captées par le premier capteur (2), le second capteur (3) étant adapté pour déterminer une deuxième position $\hat{x}^{(2)}$ de l'aéronef (10) et une caractérisation de l'erreur de positionnement de la deuxième position $\hat{x}^{(2)}$ le procédé de consolidation (100) comprenant les étapes suivantes :

      a. Estimation (étape 101) d'un écart horizontal entre la position calculée $\hat{x}^{(1)}$ de l'aéronef (10) et la deuxième position $\hat{x}^{(2)}$ de l'aéronef (10),
      b. Comparaison (étape 102) de l'écart horizontal à un seuil de détection préalablement défini,
      c. Si l'écart horizontal est inférieur au seuil de détection, calcul (étape 103) d'un niveau de protection horizontale additionnel $HPL^{(MON)}$ de la position calculée $\hat{x}^{(1)}$ à partir de la deuxième position $\hat{x}^{(2)}$,
      d. Estimation (étape 104) d'un niveau de protection horizontale consolidé $HPL^{(CON)}$ en fonction du niveau de protection horizontale additionnel $HPL^{(MON)}$ et du niveau de protection horizontale $HPL^{(1)}$,
      e. Comparaison (étape 105) du niveau de protection horizontale consolidé $HPL^{(CON)}$ et d'une limite d'alerte horizontale HAL préalablement définie,
      f. Si le niveau de protection horizontale consolidé $HPL^{(CON)}$ est inférieur à la limite d'alerte horizontale HAL, confirmation horizontale (étape 106) de la position calculée $\hat{x}^{(1)}$ de l'aéronef (10).

2. Procédé de consolidation (100) d'une solution de navigation satellitaire selon la revendication 1, comprenant une étape supplémentaire à la suite de l'étape de confirmation horizontale (étape 106) de la première position $\hat{x}^{(1)}$, de validation (étape 108) de la position calculée $\hat{x}^{(1)}$ de l'aéronef comme position consolidée de l'aéronef (10).

3. Procédé de consolidation (100) d'une solution de navigation satellitaire selon l'une des revendications 1 ou 2, dans lequel le niveau de protection horizontale additionnel $HPL^{(MON)}$ est calculé à partir de l'écart horizontal entre la position calculée $\hat{x}^{(1)}$ de l'aéronef (10) et la deuxième position $\hat{x}^{(2)}$ de l'aéronef (10) et/ou du seuil de détection d'une anomalie de positionnement dans le plan horizontal, et de la caractérisation de l'erreur de positionnement de la deuxième position $\hat{x}^{(2)}$.

4. Procédé de consolidation (100) d'une solution de navigation satellitaire selon l'une des revendications 1 à 3, dans lequel le système d'augmentation du premier capteur (2) est un système d'augmentation aérien (ABAS).

5. Procédé de consolidation (100) d'une solution de navigation satellitaire selon l'une des revendications 1 à 3, dans lequel le système d'augmentation du premier capteur (2) est un système d'augmentation Spatial (SBAS) ou un système d'augmentation au sol (GBAS).

6. Procédé de consolidation (100) d'une solution de navigation satellitaire selon l'une des revendications 1 à 5, dans lequel le premier capteur (2) est adapté pour déterminer un niveau de protection verticale $VPL^{(1)}$.

7. Procédé de consolidation (100) d'une solution de navigation satellitaire selon l'une des revendications 1 à 6, comprenant une étape supplémentaire de calcul (étape 1030) d'un niveau de protection verticale additionnel $VPL^{(MON)}$ à partir d'un écart vertical entre la position calculée $\hat{x}^{(1)}$ de l'aéronef (10) et de la deuxième position $\hat{x}^{(2)}$ de l'aéronef (10) et/ou du seuil de détection d'une anomalie de positionnement vertical, et de la caractérisation de l'erreur de positionnement de la deuxième position $\hat{x}^{(2)}$ à la suite de l'étape de calcul (étape 103) du niveau de protection horizontal additionnel $HPL^{(MON)}$.

8. Procédé de consolidation (100) d'une solution de navigation satellitaire selon la revendication 7, comprenant une étape supplémentaire d'estimation (étape 1040) d'un niveau de protection verticale consolidé $VPL^{(CON)}$ en fonction du niveau de protection verticale additionnel $VPL^{(MON)}$ et du niveau de protection verticale $VPL^{(1)}$ à la suite de l'étape d'estimation (étape 104) du niveau de protection horizontale consolidé $HPL^{(CON)}$, le procédé de consolidation (100) comprenant une étape supplémentaire de comparaison (étape 1050) du niveau de protection verticale consolidé $VPL^{(CON)}$ et d'une limite d'alerte verticale VAL préalablement définie à la suite de l'étape de comparaison (étape 105) du niveau de protection horizontale consolidé $HPL^{(CON)}$ et de la limite d'alerte horizontale HAL préalablement définie.

9. Procédé de consolidation (100) d'une solution de navigation satellitaire selon la revendication 8, comprenant une étape supplémentaire de confirmation verticale (étape 1060) de la première position $\hat{x}^{(1)}$ si le niveau de protection verticale consolidé $VPL^{(CON)}$ est inférieur à la limite d'alerte verticale VAL à la suite de l'étape de confirmation horizontale (étape 106).

10. Procédé de consolidation (100) d'une solution de navigation satellitaire selon l'une des revendications précédentes, dans lequel le seuil de détection est calculé en fonction d'une allocation de continuité.

11. Produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

12. Support d'enregistrement lisible par un processeur sur lequel est enregistré un programme comportant des instructions pour l'exécution du procédé selon l'une quelconque des revendications 1 à 10,
lorsque le programme est exécuté par un processeur.

13. Dispositif de consolidation (1) d'une solution de navigation satellitaire adapté pour mettre en œuvre le procédé de consolidation (100) selon l'une des revendications 1 à 10, comprenant le premier capteur (2) comportant un système d'augmentation, apte à déterminer une position calculée $\hat{x}^{(1)}$ de l'aéronef (10), une caractérisation de l'erreur de positionnement de la position calculée $\hat{x}^{(1)}$ et un niveau de protection horizontale $HPL^{(1)}$ et le deuxième capteur (3) de conception différente du premier capteur (2) et de niveau de conception équivalent au premier capteur (2), apte à déterminer une deuxième position $\hat{x}^{(2)}$ de l'aéronef (10) et une caractérisation de l'erreur de positionnement de la deuxième position $\hat{x}^{(2)}$.

**Patentansprüche**

1. Verfahren zur Konsolidierung (100) einer Satellitennavigationslösung für ein Luftfahrzeug (10), das Folgendes einsetzt:

   - einen ersten Sensor (2), der ein Erweiterungssystem umfasst, das angepasst ist, um eine berechnete Position $\hat{x}^{(1)}$ des Luftfahrzeugs (10), eine Beschreibung des Positionierungsfehlers der berechneten Position $\hat{x}^{(1)}$ und ein horizontales Schutzniveau $HPL^{(1)}$ der berechneten Position $\hat{x}^{(1)}$ zu bestimmen,
   einen zweiten Sensor (3), mit einer vom ersten Sensor unterschiedlichen Ausgestaltung und einem zum ersten Sensor (2) äquivalenten Ausgestaltungsniveau, wobei die Architektur und Funktionsweise des zweiten Sensors sich von der Architektur und Funktionsweise des ersten Sensors (2) unterscheiden und/oder von dem zweiten Sensor erfasste Daten sich von den von dem ersten Sensor (2) erfassten Daten unterscheiden, wobei der zweite Sensor (3) angepasst ist, um eine zweite Position $\hat{x}^{(2)}$ des Luftfahrzeugs (10) und eine Beschreibung des Positionierungsfehlers der zweiten Position $\hat{x}^{(2)}$ zu bestimmen, wobei das Verfahren zur Konsolidierung (100) die folgenden Schritte umfasst:

a. Schätzung (Schritt 101 ) einer horizontalen Abweichung zwischen der berechneten Position $\hat{x}^{(1)}$ des Luftfahrzeugs (10) und der zweiten Position $\hat{x}^{(2)}$ des Luftfahrzeugs (10),

b. Vergleich (Schritt 102) der horizontalen Abweichung mit einem vorab definierten Erfassungsschwellenwert,

c. wenn die horizontale Abweichung kleiner ist als der Erfassungsschwellenwert, Berechnung (Schritt 103) eines zusätzlichen horizontalen Schutzniveaus $HPL^{(MON)}$ der berechneten Position $\hat{x}^{(1)}$ ausgehend von der zweiten Position $\hat{x}^{(2)}$,

d. Schätzung (Schritt S104) eines konsolidierten horizontalen Schutzniveaus $HPL^{(CON)}$ in Abhängigkeit vom zusätzlichen horizontalen Schutzniveau $HPL^{(MON)}$ und vom horizontalen Schutzniveau $HPL^{(1)}$,

e. Vergleich (Schritt 105) des konsolidierten horizontalen Schutzniveaus $HPL^{(CON)}$ und einer vorab definierten horizontalen Alarmgrenze HAL,

f. wenn das konsolidierte horizontale Schutzniveau $HPL^{(CON)}$ kleiner ist als die horizontale Alarmgrenze HAL, horizontale Bestätigung (Schritt 106) der berechneten Position $\hat{x}^{(1)}$ des Luftfahrzeugs (10).

2. Verfahren zur Konsolidierung (100) einer Satellitennavigationslösung nach Anspruch 1, umfassend einen zusätzlichen Schritt, im Anschluss an den Schritt der horizontalen Bestätigung (Schritt 106) der ersten Position $\hat{x}^{(1)}$, der Validierung (Schritt 108) der berechneten Position $\hat{x}^{(1)}$ des Luftfahrzeugs als konsolidierte Position des Luftfahrzeugs (10).

3. Verfahren zur Konsolidierung (100) einer Satellitennavigationslösung nach einem der Ansprüche 1 oder 2, wobei das zusätzlich horizontale Schutzniveau $HPL^{(MON)}$ ausgehend von der horizontalen Abweichung zwischen der berechneten Position $\hat{x}^{(1)}$ des Luftfahrzeugs (10) und der zweiten Position $\hat{x}^{(2)}$ des Luftfahrzeugs (10) und/oder dem Erfassungsschwellenwert einer Positionierungsanomalie in der horizontalen Ebene, und der Beschreibung des Positionierungsfehlers der zweiten Position $\hat{x}^{(2)}$ berechnet wird.

4. Verfahren zur Konsolidierung (100) einer Satellitennavigationslösung nach einem der Ansprüche 1 bis 3, wobei das Erweiterungssystem des ersten Sensors (2) ein luftbasiertes Erweiterungssystem (ABAS) ist.

5. Verfahren zur Konsolidierung (100) einer Satellitennavigationslösung nach einem der Ansprüche 1 bis 3, wobei das Erweiterungssystem des ersten Sensors (2) ein weltraumbasiertes Erweiterungssystem (SBAS) oder ein Erweiterungssystem am Boden (GBAS) ist.

6. Verfahren zur Konsolidierung (100) einer Satellitennavigationslösung nach einem der Ansprüche 1 bis 5, wobei der erste Sensor (2) angepasst ist, um ein vertikales Schutzniveau $VPL^{(1)}$ zu bestimmen.

7. Verfahren zur Konsolidierung (100) einer Satellitennavigationslösung nach einem der Ansprüche 1 bis 6, umfassend einen zusätzlichen Schritt der Berechnung (Schritt 1030) eines zusätzlichen vertikalen Schutzniveaus $VPL^{(MON)}$ ausgehend von einer vertikalen Abweichung zwischen der berechneten Position $\hat{x}^{(1)}$ des Luftfahrzeugs (10) und der zweiten Position $\hat{x}^{(2)}$ des Luftfahrzeugs (10) und/oder dem Erfassungsschwellenwert einer vertikalen Positionierungsanomalie und der Beschreibung des Positionierungsfehlers der zweiten Position $\hat{x}^{(2)}$ im Anschluss an den Schritt der Berechnung (Schritt 103) des zusätzlichen horizontalen Schutzniveaus $HPL^{(MON)}$.

8. Verfahren zur Konsolidierung (100) einer Satellitennavigationslösung nach Anspruch 7, umfassend einen zusätzlichen Schritt der Schätzung (Schritt 1040) eines konsolidierten vertikalen Schutzniveaus $VPL^{(CON)}$ in Abhängigkeit vom zusätzlichen vertikalen Schutzniveau $VPL^{(MON)}$ und vom vertikalen Schutzniveau $VPL^{(1)}$ im Anschluss an den Schritt der Schätzung (Schritt 104) des konsolidierten horizontalen Schutzniveaus $HPL^{(CON)}$, wobei das Verfahren zur Konsolidierung (100) einen zusätzlichen Schritt des Vergleichs (Schritt 1050) des konsolidierten vertikalen Schutzniveaus $VPL^{(CON)}$ und einer vorab definierten vertikalen Alarmgrenze VAL im Anschluss an den Schritt des Vergleichs (Schritt 105) des konsolidierten horizontalen Schutzniveau $HPL^{(CON)}$ und der vorab definierten horizontalen Alarmgrenze HAL umfasst.

9. Verfahren zur Konsolidierung (100) einer Satellitennavigationslösung nach Anspruch 8, umfassend einen zusätzlichen Schritt der vertikalen Bestätigung (Schritt 1060) der ersten Position $\hat{x}^{(1)}$, wenn das konsolidierte vertikale Schutzniveau $VPL^{(CON)}$ kleiner ist als die vertikale Alarmgrenze VAL, im Anschluss an den Schritt der horizontalen Bestätigung (Schritt 106).

10. Verfahren zur Konsolidierung (100) einer Satellitennavigationslösung nach einem der vorstehenden Ansprüche, wobei der Erfassungsschwellenwert in Abhängigkeit von einer Kontinuitätszuweisung berechnet wird.

11. Computerprogrammprodukt, wobei das Computerprodukt Codeanweisungen umfasst, die ermöglichen, die Schritte des Verfahrens nach einem der Ansprüche 1 bis 10 durchzuführen, wenn das Programm auf einem Computer ausgeführt wird.

12. Von einem Prozessor lesbarer Aufzeichnungsträger, auf dem ein Programm aufgezeichnet ist, das Anweisungen zur Ausführung des Verfahrens nach einem der Ansprüche 1 bis 10, wenn das Programm von einem Prozessor ausgeführt wird, umfasst.

13. Vorrichtung zur Konsolidierung (1) einer Satellitennavigationslösung, die angepasst ist, um ein Verfahren zur Konsolidierung (100) nach einem der Ansprüche 1 bis 10 einzusetzen, umfassend einen ersten Sensor (2), der ein Erweiterungssystem umfasst, das imstande ist, eine berechnete Position $\hat{x}^{(1)}$ des Luftfahrzeugs (10), eine Beschreibung des Positionierungsfehlers der berechneten Position $\hat{x}^{(1)}$ und ein horizontales Schutzniveau $HPL^{(1)}$ zu bestimmen, und den zweiten Sensor (3), mit einer vom ersten Sensor (2) unterschiedlichen Ausgestaltung und einem zum ersten Sensor (2) äquivalenten Ausgestaltungsniveau, der imstande ist, eine zweite Position $\hat{x}^{(2)}$ des Luftfahrzeugs (10) und eine Beschreibung des Positionierungsfehlers der zweiten Position $\hat{x}^{(2)}$ zu bestimmen.

**Claims**

1. Method (100) for consolidating a satellite navigation solution for an aircraft (10) implementing:

   - a first sensor (2), comprising an augmentation system, adapted to determine a computed position $\hat{x}^{(1)}$ of the aircraft (10), a characterisation of the positioning error of the computed position $\hat{x}^{(1)}$ and a horizontal protection level $HPL^{(1)}$ of the computed position $\hat{x}^{(1)}$,
   - a second sensor (3), of design different from the first sensor and of design level equivalent to the first sensor (2), the architecture and the operation of the second sensor being different from the architecture and from the operation of the first sensor (2) and/or data captured by the second sensor being different from the data captured by the first sensor (2), the second sensor (3) being adapted to determine a second position $\hat{x}^{(2)}$ of the aircraft (10) and a characterisation of the positioning error of the second position $\hat{x}^{(2)}$, the consolidation method (100) comprising the following steps:

       a. Estimation (step 101) of a horizontal deviation between the computed position $\hat{x}^{(1)}$ of the aircraft (10) and the second position $\hat{x}^{(2)}$ of the aircraft (10),
       b. Comparison (step 102) of the horizontal deviation to a previously defined detection threshold,
       c. If the horizontal deviation is less than the detection threshold, computation (step 103) of an additional horizontal protection level $HPL^{(MON)}$ of the computed position $\hat{x}^{(1)}$ from the second position $\hat{x}^{(2)}$,
       d. Estimation (step 104) of a consolidated horizontal protection level $HPL^{(CON)}$ as a function of the additional horizontal protection level $HPL^{(MON)}$ and of the horizontal protection level $HPL^{(1)}$,
       e. Comparison (step 105) of the consolidated horizontal protection level $HPL^{(CON)}$ and of a previously defined horizontal alert limit HAL,
       f. If the consolidated horizontal protection level $HPL^{(CON)}$ is less than the horizontal alert limit HAL, horizontal confirmation (step 106) of the computed position $\hat{x}^{(1)}$ of the aircraft (10).

2. Method (100) for consolidating a satellite navigation solution according to claim 1, comprising an additional step following the horizontal confirmation step (step 106) of the first position $\hat{x}^{(1)}$, of validation (step 108) of the computed position $\hat{x}^{(1)}$ of the aircraft as the consolidated position of the aircraft (10).

3. Method (100) for consolidating a satellite navigation solution according to any one of claims 1 or 2, wherein the additional horizontal protection level $HPL^{(MON)}$ is computed from the horizontal deviation between the computed position $\hat{x}^{(1)}$ of the aircraft (10) and the second position $\hat{x}^{(2)}$ of the aircraft (10) and/or of the detection threshold of a positioning anomaly in the horizontal plane, and of the characterisation of the positioning error of the second position $\hat{x}^{(2)}$.

4. Method (100) for consolidating a satellite navigation solution according to any one of claims 1 to 3, wherein the augmentation system of the first sensor (2) is an air augmentation system (ABAS).

**5.** Method (100) for consolidating a satellite navigation solution according to any one of claims 1 to 3, wherein the augmentation system of the first sensor (2) is a space augmentation system (SBAS) or a ground augmentation system (GBAS).

**6.** Method (100) for consolidating a satellite navigation system according to any one of claims 1 to 5, wherein the first sensor (2) is adapted to determine a vertical protection level $VPL^{(1)}$.

**7.** Method (100) for consolidating a satellite navigation solution according to any one of claims 1 to 6, comprising an additional step (step 1030) of computing an additional vertical protection level $VPL^{(MON)}$ from a vertical deviation between the computed position $\hat{x}^{(1)}$ of the aircraft (10) and of the second position $\hat{x}^{(2)}$ of the aircraft (10) and/or of the detection threshold of a vertical positioning anomaly, and of the characterisation of the positioning error of the second position $\hat{x}^{(2)}$ following the step (step 103) of computing the additional horizontal protection level $HPL^{(MON)}$.

**8.** Method (100) for consolidating a satellite navigation solution according to claim 7, comprising an additional step (step 1040) of estimating a consolidated vertical protection level $VPL^{(CON)}$ as a function of the additional vertical protection level $VPL^{(MON)}$ and of the vertical protection level $VPL^{(1)}$ following the step (step 104) of estimating the consolidated horizontal protection level $HPL^{(CON)}$, the consolidation method (100) comprising an additional step (step 1050) of comparing the consolidated vertical protection level $VPL^{(CON)}$ and a previously defined vertical alert limit VAL following the step (step 105) of comparing the consolidated horizontal protection level $HPL^{(CON)}$ and the previously defined horizontal alert limit HAL.

**9.** Method (100) for consolidating a satellite navigation solution according to claim 8, comprising an additional step (step 1060) of vertically confirming the first position $\hat{x}^{(1)}$ if the consolidated vertical protection level $VPL^{(CON)}$ is less than the vertical alert limit VAL following the horizontal confirmation step (step 106).

**10.** Method (100) for consolidating a satellite navigation solution according to any one of the preceding claims, wherein the detection threshold is computed as a function of a continuity allocation.

**11.** Computer program product, said computer program comprising code instructions making it possible to carry out the steps of the method according to any of claims 1 to 10, when said program is executed on a computer.

**12.** Recording medium which can be read by a processor, on which a program comprising code instructions for executing the method is recorded, according to any one of claims 1 to 10, when the program is executed by a processor.

**13.** Device (1) for consolidating a satellite navigation solution adapted to implement the consolidation method (100) according to any one of claims 1 to 10, comprising the first sensor (2) comprising an augmentation system, capable of determining a computed position $\hat{x}^{(1)}$ of the aircraft (10), a characterisation of the positioning error of the computed position $\hat{x}^{(1)}$ and a horizontal protection level $HPL^{(1)}$ and the second sensor (3) of design different from the first sensor (2) and of design level equivalent to the first sensor (2), capable of determining a second position $\hat{x}^{(2)}$ of the aircraft (10) and a characterisation of the positioning error of the second position $\hat{x}^{(2)}$.

Figure 1

101 — Estimation de l'écart entre la position calculée $\hat{x}^{(1)}$ et la deuxième position $\hat{x}^{(2)}$

100

102 — Comparaison de l'écart au seuil de détection

103 — Calcul du niveau de protection horizontal additionnel $HPL^{(MON)}$

1030 — Calcul du niveau de protection vertical additionnel $VPL^{(MON)}$

104 — Estimation d'un niveau de protection horizontal consolidé $HPL^{(CON)}$

1040 — Estimation d'un niveau de protection vertical consolidé $VPL^{(CON)}$

105 — Comparaison du niveau de protection horizontal consolidé $HPL^{(CON)}$ et de la limite d'alerte horizontale HAL

1050 — Comparaison du niveau de protection vertical consolidé $VPL^{(CON)}$ et de la limite d'alerte vertical VAL

106 — Authentification horizontale de la position calculée $\hat{x}^{(1)}$

1060 — Authentification verticale de la première position $\hat{x}^{(1)}$

108 — Validation de la position calculée $\hat{x}^{(1)}$ comme position exacte

110 — Alerte d'interruption de l'opération

## Figure 2

## Figure 3

## EP 4 264 329 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3006771 A1